# NEUE EUROPÄISCHE PATENTSCHRIFT

(11) **EP 0 862 748 B2**
(45) Veröffentlichungstag und Bekanntmachung des Hinweises auf die Entscheidung über den Einspruch: **24.05.2006**
(45) Hinweis auf die Patenterteilung: 11.04.2001
(21) Anmeldenummer: 96937157.4
(22) Anmeldetag: 19.11.1996
(51) Int. Cl.: G01T 1/00

(54) **OPTISCHE ANORDNUNG UND VERFAHREN ZUM ELEKTRONISCHEN ERFASSEN EINES RÖNTGENBILDS**
OPTICAL ARRANGEMENT AND METHOD FOR ELECTRONICALLY DETECTING AN X-RAY IMAGE
AGENCEMENT OPTIQUE ET PROCEDE POUR LA DETECTION ELECTRONIQUE D'UNE IMAGE RADIOGRAPHIQUE

(30) Priorität: 24.11.1995 CH 333095
(43) Veröffentlichungstag der Anmeldung: 09.09.1998
(60) Teilanmeldung: 00118964.6
(73) Patentinhaber: Swissray Medical AG, 6280 Hochdorf (CH)
(72) Erfinder: WÄGLI, Peter, CH-5620 Bremgarten (CH); LAUPPER, Ruedi, G., CH-6285 Hitzkirch (CH)
(74) Vertreter: Hepp, Dieter
(86) Internationale Anmeldenummer: PCT/CH1996/000410
(87) Internationale Veröffentlichungsnummer: WO 1997/020231

(56) Entgegenhaltungen:
- EP-A- 0 213 428
- EP-A- 0 373 717
- EP-A- 0 666 483
- DE-A- 3 141 755
- US-A- 4 219 149
- US-A- 4 809 314
- US-A- 5 016 109
- US-A- 5 309 496
- IEEE TRANS ON NUCLEAR SCIENCE, Bd. 40, Nr. 4, Oktober 1993, NEW YORK USA, Seiten 1275-1281, XP000397588 MCFARLAND E W ET AL.: "SEGMENTED ARRAY RECONSTRUCTIONS FOR TOMOGRAPHIC IMAGING OF LARGE OBJECTS:THEORY AND AN APPLICATION TO NEUTRON COMPUTED TOMOGRAPHY"

## Beschreibung

Die Erfindung betrifft eine Anordnung zum elektronischen Erfassen eines Röntgenbilds sowie ein Verfahren zum Erfassen eines durch Röntgenstrahlen auf der Oberfläche eines Converters erzeugten sichtbaren Bilds.

Röntgenbilder im Bereich des sichtbaren Lichts werden traditionell an Flächen erzeugt, welche die vom durchstrahlten Objekt modulierten Röntgenstrahlen in sichtbares Licht umsetzen. Allgemein verbreitet werden dazu Szintillations-Folien eingesetzt. Derartige Folien enthalten z.B. Cäsiumiodid. Alternativ sind auch andere Primärbild-Anordnungen, wie z.B. beschichtete Glas- oder Kunststoff-Scheiben denkbar.

Zur Fernseh-Uebertragung von Röntgenbildern wurden auch schon Fernsehkameras eingesetzt. Dabei wird ein Röntgenbildverstärker verwendet, der die vom durchstrahlten Objekt modulierten Röntgenstrahlen aufnimmt und ein verstärktes Ausgangsbild über eine lichtstarke Optik auf die Projektionsfläche einer Fernsehkamera weitergibt. Die Fernsehkamera liefert elektrische Signale, die im Monitor zum Durchleuchtungsbild zurückverwandelt werden. Der Bildverstärker besteht dabei aus einer evakuierten Röhre, an dessen Stirnseite sich als Primärbild-Anordnung ein Röntgenleuchtschirm befindet. Unmittelbar dahinter befindet sich die Photokathode, aus der nach dem Lichteinfall Elektronen austreten, deren Zahl der Anregung des Leuchtschirm durch die Röntgenstrahlen proportional ist. Die Bildverstärkung entsteht dadurch, dass die emittierten Photoelektronen durch ein elektrisches Feld beschleunigt werden und den gegenüberliegenden Ausgangsleuchtschirm zum mehrfach intensivierten Leuchten anregen. Das Ausgangsbild kann auf verschiedene Weise zur Eingangsoptik der Fernsehaufnahmeröhre übertragen werden. Bekannt sind z.B. elektrostatische Abbildungen, bei welchen das Bild auf dem Eingangsfenster elektronenoptisch auf das Ausgangsfensterverkleinert und so an das Fenster der Kamera angepasst wird. Es kann auch durch eine optische Linsenanordnung übertragen werden, bei der sich das Ausgangsbild des Bildverstärkers in der Brennebene eines ersten Objektivs befindet, wobei das Bild in der Brennebene des Kameraobjektivs erzeugt wird. Statt der optischen Uebertragung lässt sich das Bild von der Ausgangsseite des Bildverstärkers auch mittels Faseroptik auf die Eingangsoptik der Fernsehkamera übertragen.

Derartige Fernseh-Systeme sind ausserordentlich aufwendig, erfordern speziell angepasste Röntgengeräte und sind aufgrund des grossen Platzbedarfs in Standard-Röntgengeräte nicht integrierbar.

In der Praxis werden deshalb meist Laser-Image-Systerne eingesetzt, um Röntgenbilder in elektrische Signale umzuwandeln und die Bildsignale zu speichern, zu übertragen oder auf andere Weise zu verarbeiten. Bei Laser-Image-Systemen werden vorwiegend Speicherfolien verwendet, welche die modulierte Röntgenstrahlung in metastabilem Zustand speichern. Die Folien werden durch einen HeNe-Laser zum Leuchten angeregt. Dadurch kann das Signal elektrooptisch gewandelt werden. Alternativ können auch herkömmlich belichtete Filme "gescannt" werden. Dabei wird also das Primärbild auf der Folie bzw. dem Film erzeugt, was den Einsatz konventioneller Filmkassetten ("Bucky's") ermöglicht. Andererseits ist mit solchen Anordnungen keine On-Line-Uebertragung möglich, sondern zur Umwandlung ist ein separater Abtastvorgang erforderlich.

Aus IEEE Transaction on Nuclear Science (ICE Vol 40, No 4, Aug 1993/Seite 1275) ist es bekannt, ein auf einem Szintillationsschirm erzeugtes Bild mit einem Spiegel umzulenken und auf mehrere, nebeneinanderliegende CCD Kameras umzulenken. Eine Reduktion der Bauhöhe der Kameraanordnung lässt sich damit nicht erzielen.

Aufgabe der Erfindung ist es, eine Anordnung und ein Verfahren zu schaffen, welche die On-Line-Erfassung und Uebertragung sowie die Darstellung von Röntgenbildern auf wirtschaftlich einfache Weise ermöglicht und auch das nachträgliche Umrüsten konventioneller Röntgengeräte technisch ermöglicht.

Diese Aufgabe wird durch eine Vorrichtung bzw. ein Verfahren gemäss den Patentansprüchen 1 und 9 gelöst.

Durch die Anordnung von zwei oder mehr Spiegeln lässt sich einerseits das Bild in Segmente aufteilen, was eine Miniaturisierung der optischen Systeme zulässt. Ersichtlicherweise werden auch die Umlenkanordnungen, insbesondere Spiegel, dadurch verkleinert, dass sie nur einzelne Segmente des Bilds erfassen müssen.

Ausserdem wird durch die Umlenkung erreicht, dass der Strahlengang parallel zur Oberfläche des Converters verläuft, wodurch sich die Kamera-Systeme seitlich vom Converter anordnen lassen. Dies wiederum reduziert die Aufbauhöhe der Anordnung, so dass sich die erfindungsgemässe Anordnung in konventionelle Filmkassetten einbauen lässt. Als Umlenkanordnung eignen sich sowohl konventionelle Spiegel als auch Prismen oder andere optische Ablenksysteme. Beim Einsatz eines Prismas ist es z.B. denkbar, Linsensysteme mit zu integrieren. Wenn der Spiegel bzw. die Umlenkanordnung etwa V-förmig zu einer Achse der Abbildungsfläche angeordnet ist, ergibt sich eine Bildteilung. Dabei ist es zweckmässig, wenn sich die beiden Bild-Segmente, also Bildhälften, leicht überlappen, so dass keine Bildinformation verloren geht. Dies lässt sich z.B. dadurch erreichen, dass die beiden Spiegel unter einem Winkel von etwas mehr als 90° zueinander angeordnet sind. Auch der Einsatz gekrümmter Spiegelflächen mit entsprechender elektronischer oder optischer Entzerrung bei der nachfolgenden Verarbeitung ist denkbar.

Als Kamera-Systeme eignen sich besonders CCD-Kameras, die eine Miniaturisierung der Gesamtanordnung zulassen.

Die Verarbeitung der von den Kamera-Systemen erzeugten elektronischen Bilder ist Stand der Technik. So sind heute Systeme im Markt erhältlich, mit denen sich die Bilder verschiedener Kameras mischen bzw. wieder zu einem Gesamtbild kombinieren lassen. Die Kamera-Systeme müssen dabei nicht unbedingt unmittelbar im Strahlengang der Umlenkanordnung angeordnet sein. Selbstverständlich ist auch Mehrfach-Umlenkung oder die Zwischenschaltung von Lichtleiter-Anordnungen, Bildverstärkern und anderen optischen und/oder elektronischen Bildbearbeitungs-Einrichtungen möglich.

Zudem ist es auch möglich, die Kamera-Systeme seitlich auswechselbar an einer mit den Umlenkspiegeln versehenen Filmkassette lösbar oder austauschbar anzubringen. Dadurch kann einerseits das relativ teure Kamera-System für eine Mehrzahl von Filmkassetten verwendet werden. Andererseits ist Wartung und Reparatur auf diese Weise einfacher.

Die Verarbeitung derelektronischen Bildsignale in einer Datenverarbeitungsanlage kann z. B. so vorgesehen werden, dass zum Sekundär-Bild zusammengefügte Signale an ein Terminal oder an mehrere Terminals weitergegeben werden. Die Signale lassen sich auch speichern oder Sekundär-Bilder können als Hardcopy z. B. über einen Plotter ausgegeben werden.

Die Erfindung ist im Folgenden in Ausführungsbeispielen anhand der Zeichnungen näher erläutert:

Es zeigen:
- Figur 1: die schematische Darstellung einer erfindungsgemässen Anordnung zum elektronischen Erfassen eines Röntgenbilds in Seitenansicht,
- Figur 2: die Anordnung gemäss Figur 1 in perspektivischer Darstellung,
- Figur 3: ein abgewandeltes Ausführungsbeispiel mit zwei Kamera-Systemen und
- Figur 4: ein weiter abgewandeltes Ausführungsbeispiel der Erfindung.

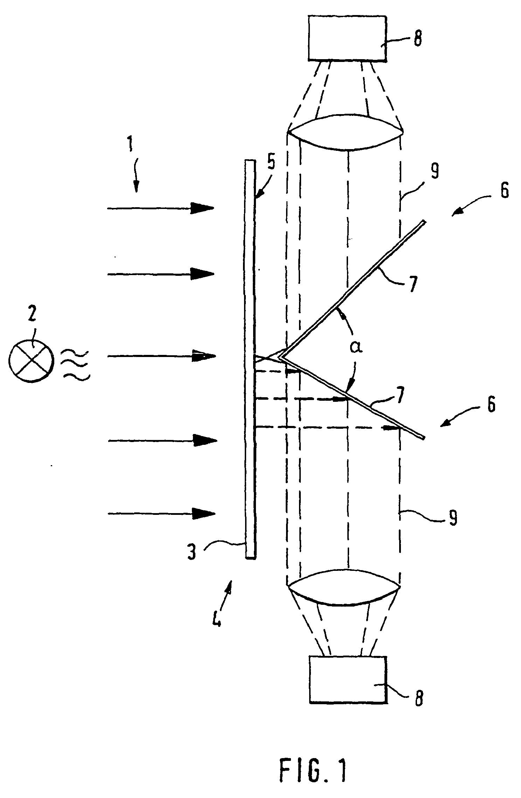

Gemäss Figur 1 ist im Strahlengang 1 einer Röntgenröhre 2 eine Szintillations-Folie 3 angeordnet, die als Converter 4 zum Umwandeln der vom durchstrahlten Objekt modulierten Röntgenstrahlen in sichtbares Licht vorgesehen ist. Auf der Abbildungsfläche 5 entsteht so ein Bild, das von zwei Umlenkanordnungen 6 erfasst und so abgebildet wird, dass es von Kamera-Systemen 8 aufgenommen werden kann. Die Umlenkanordnungen sind dabei als V-förmig zueinander angeordnete Spiegel 7 ausgebildet. Die Spiegel sind unter einem Winkel a zueinander angeordnet, der etwas grösser ist als 90°. Die beiden Spiegel 7 erfassen damit etwas mehr als nur die Hälfte des auf der Abbildungsfläche 5 dargestellten Bilds, so dass Bild-Verluste mit Sicherheit vermieden werden.

Der optische Strahlengang 9 zwischen den Spiegeln 7 und den Kamera-Systemen 8 verläuft dabei etwa parallel zur Abbildungsoberfläche 5, so dass die Kamera-Systeme 8 neben dem Converter 4 angeordnet werden können. Damit wird die Dicke des Gesamtaufbaus minimiert.

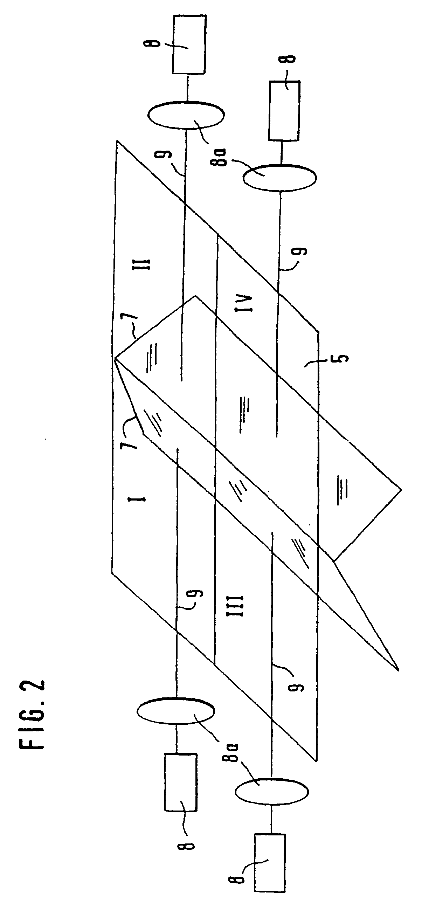

Figur 2 zeigt die Anordnung gemäss Figur 1. Wie dargestellt, wird das von einem Spiegel 7 reflektierte Bild jeweils durch zwei separate CCD-Kameras 8 erfasst. Das auf der Abbildungsfläche 5 der Szintillations-Folie 3 (Figur 1) erzeugte Bild wird demnach in vier einzelne Segmente I, II, III und IV "zerlegt". Durch Einsatz von zwei Spiegeln und Anordnung von vier Kamera-Systemen lässt sich ganz besonders optimal die Höhe des Gesamtaufbaus minimieren. Vor allem wird auch die den Kamera-Systemen 8 zugeordnete Optik 8a (Linsensysteme) in der Grösse minimiert. In der Praxis haben sich als Linsensysteme 8a Objektive mit hoher Lichtstärke (F gleich oder kleiner 1.0) bewährt, die vier Segmente erfassen und auf einen CCD-Chip abbilden. Besonders geeignet sind dabei CCD-Chips mit einem Format von 1024×1280 Pixel. Damit lassen sich Bilder mit ausreichender Auflösung erzeugen, wobei das Normalformat der Darstellung 35x43 cm entspricht. Das Zusammenfügen der von den CCD-Kameras 8 erzeugten elektronischen Bildsignale zu einem Gesamtbild kann auf beliebige Weise in einer Bild-Mischanordnung erfolgen.

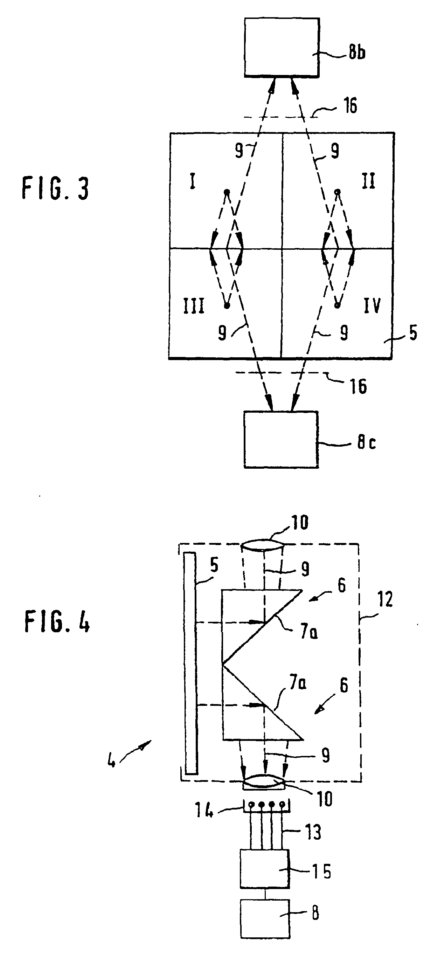

Figur 3 zeigt ein Ausführungsbeispiel, bei dem die vier Bild-Segmente I, II, III und IV jeweils paarweise gespiegelt werden, wobei die Bild-Segmente I und II an ein erstes Kamera-System 8b umgelenkt und die Bild-Segmente III und IV an ein zweites Kamera-System 8c umgelenkt werden. Bei dieser Anordnung ist eine CCD-Kamera mit einem entsprechend angepassten Format erforderlich. Alternativ könnten auch in den Strahlengängen 9 Unterbrecher 16 angeordnet werden, welche abwechselnd Lichtstrahlen von einem der Segmente I oder II und lll oder IV zulassen. Eine derartige sequentielle Bildverarbeitung erfordert höheren Aufwand beim Mischen, reduziert jedoch die Kosten für die CCD-Kamera. Derartige Bild-Unterbrechung lässt sich auch in elektronischen Bildverstärkern erreichen, die Bestandteil der CCD-Kamera sein können. Dementsprechend könnte jedem der Strahlengänge I, II, lll und IV je ein Bildverstärker zugeordnet sein, wobei dann die Bildverstärker paarweise mit je einer CCD-Kamera optisch verbunden sind. Eine solche Anordnung mit Bildverstärker und CCD-Kamera ist in Figur 4 schematisch dargestellt. Bei diesem Ausführungsbeispiel wird das auf derAbbildungsfläche 5 eines Converters 4 dargestellte Bild von zwei Prismen 7a erfasst. Die von den Prismen reflektierten Lichtstrahlen (Strahlengang 9) werden durch Linsen 10 gebündelt. Die Prismen 7a sowie die Linsen 10 sind zusammen mit dem Converter 4 in einem schematisch angedeuteten Gehäuse 12 untergebracht. Seitlich am Gehäuse 12 lassen sich Lichtleiter 13 auf konventionelle Weise mittels Stecker-Verbindungen 14 so anbringen, dass sie das von den Linsen 12 fokusierte Bild-Segment übernehmen und einem Bildverstärker 15 zuführen. Der Bildverstärker 15 ist mit einer CCD-Kamera verbunden, welche das erfasste Bild in elektronische Signale umwandelt.

Ersichtlicherweise können dabei analog zum Ausführungsbeispiel gemäss Figur 2 vier Linsen 10 entsprechend mit Prismen 7a zusammenwirken, um die Abbildungsoberfläche in vier Segmente I, II, III, IV zu unterteilen. Dementsprechend müssten auch vier Stekker 14 und vier Bildverstärker 15 sowie vier Kamera-Systeme 8 vorgesehen werden.

Die Erfindung ist dabei selbstverständlich nicht auf CCD-Kameras beschränkt.

## Patentansprüche

1. Anordnung zum elektronischen Erfassen eines Röntgenbilds, mit einem Converter (4) zum Umwandeln von Röntgenstrahlen in ein auf einer Abbildungsfläche (5) dargestelltes Bild, welche Anordnung im Strahlengang (9) einer Röntgenröhre einsetzbar ist,
und Umlenkanordnungen (6) aufweist, die Segmente (I, II, III, IV) der Abbildungsfläche (5) und des auf dieser dargestellten Bilds abbilden, wobei die Anordnung wenigstens zwei elektronische Kamera-Systeme (8) zum Umwandeln der von den Umlenkanordnungen (6) reflektierten Bild-Segmente in elektrische Signale aufweist, **dadurch gekennzeichnet, dass** die Anordnung zwei Umlenkanordnungen aufweist, die als Spiegel (7) ausgebildet sind, wobei die Spiegel (7) V-förmig zu einer Achse der Abbildungsfläche (5) angeordnet sind.

2. Anordnung nach Anspruch 1, **dadurch gekennzeichnet, dass** der Bild-Strahlengang (9) zwischen je einem Spiegel (7) und einem Kamera-System (8) etwa parallel zum Bild auf der Abbildungsfläche (5) verläuft.

3. Anordnung nach einem der vorangegangenen Ansprüche, **dadurch gekennzeichnet, dass** die Kamera-Systeme (8) eine CCD-Kamera enthalten.

4. Anordnung nach einem der vorangegangenen Ansprüche, **dadurch gekennzeichnet, dass** die Kamera-Systeme (8) seitlich neben dem Converter (4) und/oder einem den Converter (4) und die Umlenkanordnungen (6) enthaltenden Gehäuse (12) angeordnet sind.

5. Anordnung nach Anspruch 4, **dadurch gekennzeichnet, dass** die Kamera-Systeme (8) auswechselbar sind.

6. Anordnung nach einem der vorangehenden Ansprüche, **dadurch gekennzeichnet, dass** die sich durch die V-förmige Anordnung zweier Spiegel ergebenden Bildhälften sich leicht überlappen.

7. Anordnung nach einem der vorangehenden Ansprüche, **dadurch gekennzeichnet, dass** bei der V-förmigen Anordnung zweier Spiegel (7) das von einem Spiegel (7) reflektierte Bild jeweils durch zwei separate CCD-Kameras (8) erfasst wird, und dass das auf der Abbildungsfläche (5) dargestellte Bild somit in vier einzelne Segmente (I, II, III, IV) aufteilbar ist.

8. Anordnung nach einem der Ansprüche 1 bis 6, **dadurch gekennzeichnet, dass** das auf der Abbildungsfläche (5) dargestellte Bild in vier Bildsegmente (I, II, III, IV) aufteilbar ist, welche jeweils paarweise umlenkbar sind, wobei jedes Bildsegmentpaar je auf ein Kamera-System (8b, 8c) umlenkbar ist.

9. Verfahren zum elektronischen Erfassen eines durch Röntgenstrahlung auf der Oberfläche eines Converters (4) erzeugten sichtbaren Bildes,
in dem die vom Converter (4) abgegebenen Lichtstrahlen durch Umlenkanordnungen (6) umgelenkt werden, und in dem die umgelenkten Lichtstrahlen durch ein Kamera-System (8) erfasst und in elektrische Signale umgewandelt werden, **dadurch gekennzeichnet, dass** die vom Converter (4) abgegebenen Lichtstrahlen an zwei V-förmig zu einer Achse der Abbildungsfläche angeordneten Spiegel (7) etwa parallel zur Oberfläche des Converters (4) umgelenkt werden, wobei die Spiegel im Wesentlichen voneinander verschiedene Segmente (I, II, III, IV) des Bildes erfassen.

## Claims

1. An arrangement for the electronic acquisition of an X-ray picture, with a converter (4) for converting X-ray beams into a picture displayed on an imaging surface (5), said arrangement being able to be applied in the beam path (9) of an X-ray tube and comprising deflection arrangements (6) which image segments (I, II, III, IV) of the imaging surface (5) and of the picture displayed on this, wherein the arrangement comprises at least two electronic camera systems (8) for converting the picture segments reflected by the deflection arrangements (6) into electrical signals, **characterised in that** the arrangement comprises two deflection arrangements which are formed as mirrors (7), wherein the mirrors (7) are arranged V-shaped to an axis of the imaging surface (5).

2. An arrangement according to claim 1, **characterised in that** the picture beam path (9) runs between in each case one mirror (7) and a camera system (8) roughly parallel to the picture on the imaging surface (5).

3. An arrangement according to one of the preceding claims, **characterised in that** the camera systems (8) contain a CCD camera.

4. An arrangement according to one of the preceding claims, **characterised in that** the camera systems (8) are arranged laterally next to the converter (4) and/or a housing (12) containing the converter (4) and the defletion arrangements (6).

5. An arrangement according to claim 4, **characterised in that** the camera sytsems (8) are exchangeable.

6. An arrangement according to one of the preceding claims, **characterised in that** image halves produced by the V-shaped arrangement of two mirrors overlap one another slightly.

7. An arrangement according to one of the preceding claims, **characterised in that** in the case of the V-shaped arrangement of two mirrors (7) the image reflected by one mirror (7) is respectively detected by two separate CCD cameras (8), and **in that** the image displayed on the imaging surface (5) can therefore be divided into four individual segments (I, II, III, IV).

8. An arrangement according to one of claims 1 to 6, **characterised in that** the picture displayed on the imaging surface (5) is dividable into four picture segments (I, II, III, IV) which in each case are deflectable in pairs, wherein each picture segment pair in each case is deflectable onto a camera system (8b, 8c).

9. A method for the electronic acquisition of a visible picture produced on the surface of a converter (4), by X-ray irradiation
in which the light beams emitted by the converter (4) are deflected by way of deflection arrangements (6), and in which the deflected light beams are acquired by a camera system (8) and converted into electrical signals, **characterised in that** the light beams emitted by the converter (4) at two mirrors (7) arranged V-shaped to an axis of the imaging surface are deflected roughly parallel to the surface of the converter (4), wherein the mirrors acquire segments (I, II, III, IV) of the picture which are essentially different from one another.

## Revendications

1. Dispositif pour l'enregistrement électronique d'une radiographie, comportant un convertisseur (4) destiné à convertir des rayons X en une image représentée sur un plan de représentation (5), lequel dispositif peut être mis en oeuvre dans la trajectoire de rayon (9) d'un tube à rayons X et comporte des dispositifs de déviation (6) qui représentent des segments (I, II, III, IV) de la surface de représentation (5) et de l'image représentée sur celle-ci, ce dispositif comportant au moins deux systèmes de caméra électroniques (8) destinés à convertir en signaux électriques les segments d'image réfléchis par les dispositifs de déviation (6), **caractérisé en ce qu'**il comporte deux dispositifs de déviation qui sont conçus comme des miroirs (7), les miroirs (7) étant disposés en V par rapport à un axe de la surface de représentation (5).

2. Dispositif selon la revendication 1, **caractérisé en ce que** la trajectoire de rayon d'image (9) s'étend, entre un miroir (7) et un système de caméra (8), à peu près parallèlement à l'image présente sur la surface de représentation (5).

3. Dispositif selon l'une des revendications précédentes, **caractérisé en ce que** les systèmes de caméra (8) contiennent une caméra CCD.

4. Dispositif selon l'une des revendications précédentes, **caractérisé en ce que** les systèmes de caméra (8) sont disposés près du convertisseur (4), latéralement, et/ou près d'un boîtier (12) contenant le convertisseur (4) et les dispositifs de déviation (6).

5. Dispositif selon la revendication 4, **caractérisé en ce que** les systèmes de caméra (8) sont échangeables.

6. Dispositif selon l'une des revendications précédentes, **caractérisé en ce que** les moitiés d'image obtenues grâce à la disposition en V de deux miroirs se chevauchent légèrement.

7. Dispositif selon l'une des revendications précédentes, **caractérisé en ce qu'**avec la disposition en V de deux miroirs (7), l'image réfléchie par chaque miroir (7) est détectée par deux caméras CCD (8) séparées, et **en ce que** l'image représentée sur la surface de représentation (5) peut ainsi être divisée en quatre segments individuels (I, II, III, IV).

8. Dispositif selon l'une des revendications 1 à 6, **caractérisé en ce que** l'image représentée sur la surface de représentation (5) est apte à être divisée en quatre segments d'image (I, II, III, IV) qui sont aptes à être déviés par paire, chaque paire de segments d'image étant apte à être déviée vers un système de caméra (8b, 8c).

9. Procédé pour l'enregistrement électronique d'une image visible produite par des rayons X sur la surface d'un convertisseur (4), selon lequel les rayons lumineux émis par le convertisseur (4) sont déviés par les dispositifs de déviation (6) et selon lequel les rayons lumineux déviés sont enregistrés par un système de caméra (8) et sont convertis en signaux électriques,
**caractérisé en ce que** les rayons lumineux émis par le convertisseur (4) sont déviés à peu près parallèlement à la surface du convertisseur (4) au niveau de deux miroirs (7) disposés en V par rapport à un axe de la surface de représentation, les miroirs enregistrant essentiellement des segments différents (I, II, III, IV) de l'image.
